# EUROPÄISCHE PATENTSCHRIFT

(11) **EP 0 709 350 B1**
(45) Veröffentlichungstag und Bekanntmachung des Hinweises auf die Patenterteilung: **14.05.1997**
(21) Anmeldenummer: 95111367.9
(22) Anmeldetag: 20.07.1995
(51) Int. Cl.: C04B 28/02, C04B 24/28

(54) **Härtbare Baustoffgemische**
Hardenable building material mixtures
Mélanges de matériaux de construction durcissables

(30) Priorität: 19.10.1994 DE 4437419
(43) Veröffentlichungstag der Anmeldung: 01.05.1996
(73) Patentinhaber: Bakelite AG, 58642 Iserlohn-Letmathe (DE)
(72) Erfinder: Lottanti, Giuseppe, Dr., CH-8956 Killwangen (CH); Libera, Carlo Dalla, I-35030 Selvazzano Dentro (IT); De Salvadori, Floriano, I-35030 Cervarese Santa Croce (IT); Conrad, Karl-Hermann, Dr., D-47447 Moers (DE); Herzog, Rolf, Dr., D-46240 Bottrop (DE); Schubert, Helmut, D-46117 Oberhausen (DE)

(56) Entgegenhaltungen:
- EP-A- 0 103 908
- EP-A- 0 387 480
- DE-A- 3 124 232
- DE-B- 1 159 839
- FR-A- 1 549 150
- DATABASE WPI Section Ch, Week 7821 Derwent Publications Ltd., London, GB; Class A93, AN 78-37165A & JP-A-53 039 322 (SANYO KK), 11 April 1978
- DATABASE WPI Section Ch, Week 9149 Derwent Publications Ltd., London, GB; Class A21, AN 91-357899 & JP-A-03 239 719 (SUMITOMO RUBBER IND KK), 25 Oktober 1991
- PATENT ABSTRACTS OF JAPAN vol. 016 no. 249 (C-0948) ,8.Juni 1992 & JP-A-04 057821 (TOURE CHIOKOORU KK) 25 Februar 1992
- DATABASE WPI Section Ch, Week 8851 Derwent Publications Ltd., London, GB; Class A14, AN 88-365157 & JP-A-63 275 603 (DENKI KAGAKU KOGYO KK), 14 November 1988

## Beschreibung

Die Erfindung betrifft härtbare Gemische aus hydraulischen Bindemitteln, Zusatz- und Zuschlagstoffen, Wasser, Epoxidharz und Härter.

Es ist bekannt, hydraulische Bindemittel mit duroplastischen Kunststoffen zu kombinieren und dadurch Baustoffe mit verbesserten Eigenschaften herzustellen. Insbesondere hochwertige Baustoffe erhält man durch die Vergütung von Zement mit Epoxidharzen, wie dies z.B. aus DE-PS 11 59 839, DE-OS 15 95 467 oder EP-B 0 103 908 bekannt ist.

Es ist ein Nachteil aller dieser Systeme, daß sowohl die Epoxidharze und die Härter als auch vorgemischte Epoxidharz-Härter-Mischungen in Wasser emulgiert werden müssen. Dieser zusätzliche Arbeitsgang ist unwirtschaftlich und ist zudem Ursache für viele Fehlschläge: In der betrieblichen Praxis ist die exakt reproduzierbare Herstellung der Emulsionen nicht gewährleistet. Geringe Unterschiede in den Emulsionen aber führen zu Qualitätsunterschieden in den entsprechenden gehärteten Gemischen, d.h. in den aus diesen Gemischen hergestellten Baumaterialien.

Selbst die vorgemischten Trockenmörtel, wie sie z.B. aus EP-B 0 387 480 bekannt sind, in denen Zement, Epoxidharz und latente Härter vorgemischt sind und zum Gebrauch lediglich mit Wasser vermischt werden, beheben diese Mängel nicht. Im Gegenteil, zu den durch unterschiedliche Mischbedingungen hervorgerufenen Unterschieden entstehen noch solche, die durch unterschiedliche Vorreaktionen in der Trockenmischung während der Lagerphase bedingt sind.

Alle bislang bekannten, mit Epoxidharz vergüteten hydraulischen Bindemittelgemische haben den weiteren Nachteil, daß ihre Festigkeiten bei der Härtung relativ langsam aufgebaut werden, so daß die Belastung der mit diesen Gemischen hergestellten Oberflächen und Werkstoffe erst nach einer Härtezeit von mindestens 7 Tagen erfolgen kann.

Es ist daher Aufgabe der Erfindung, härtbare Gemische aus hydraulischen Bindemitteln, Zusatz- und Zuschlagstoffen, Wasser, Epoxidharz und Härter bereitzustellen, die einerseits einfach und gut reproduzierbar hergestellt werden können, die somit die bekannt guten Eigenschaften der mit Epoxidharz vergüteten hydraulischen Bindemittel ergeben, die aber zusätzlich den Vorteil zeigen, daß innerhalb von 1-2 Tagen hohe Festigkeiten erzielt werden.

Die Lösung der Aufgabe erfolgt durch härtbare Gemische gemäß den Ansprüchen 1-4, und durch Verfahren zu ihrer Herstellung gemäß den Ansprüchen 5-6. Die erfindungsgemäßen härtbaren Gemische werden insbesondere als Reparaturmörtel bei der Sanierung von Betonböden und -wänden, zur Fahrbahnsanierung, zur Innen- und Außenbeschichtung von Metallrohren, als Einpreßmörtel sowie zur Herstellung von Gebirgsankern, als Spachtelmassen für den Korrosionsschutz sowie als Kleber für mineralische Baustoffe verwendet, wie dies in den Ansprüchen 7-13 beansprucht wird.

Es wurde gefunden, daß durch einfaches Mischen der Komponenten miteinander eine gleichmäßige Verteilung von Epoxidharz und Härter mit hydraulischen Bindemitteln, Zusatz- und Zuschlagstoffen und Wasser erzielt wird, wenn die Härterkomponente zu mindestens 20 % ihres Gewichtes aus einem araliphatischen Polyamin besteht.

Unabhängig davon, in welcher Reihenfolge die Komponenten der Mischung zusammengegeben werden, und unabhängig davon, ob und welche anderen aminischen Härter zusätzlich mit eingesetzt werden, bewirkt die relativ geringe Menge an zugesetztem araliphatischem Polyamin innerhalb kurzer Mischzeit eine homogene Verteilung der organischen Komponenten in dem ansonsten anorganisch-wäßrigen Gemisch.

Direkt nach dem Zusammengeben der zur Härtung dienenden Komponenten beginnen die Abbinde- und Härtungsreaktionen, wobei die Verarbeitungszeiten durch die Wahl der Art und Menge der aminischen Härter gesteuert werden kann. Überraschenderweise aber werden in jedem Fall bereits nach einem Tag hohe Festigkeitswerte erhalten, so daß die entsprechenden gehärteten Produkte bereits nach 1-2 Tagen belastet werden können.

Es ist ein weiterer unerwarteter Vorteil der erfindungsgemäßen härtbaren Gemische, daß sie zu Produkten härten, bei denen der E-Modul in einem weiten Bereich beliebig eingestellt werden kann, ohne daß die Druck- und die Biegefestigkeiten wesentlich verändert werden. Obwohl die Druck- und Biegezugfestigkeiten im wesentlichen unverändert bleiben, lassen sich die E-Modulwerte durch steigende Mengen an araliphatischem Polyamin senken, d.h. es läßt sich gezielt ein Beton mit plastischen Eigenschaften einstellen.

Die erfindungsgemäßen, härtbaren Gemische bestehen aus hydraulischem Bindemittel, Betonzusatzmittel, -zusatzstoffen sowie Betonzuschlag, Wasser, Epoxidharz und Epoxidharz-Härter.

Hydraulische Bindemittel sind Gips, Anhydrit, Kalk, Zement oder auch Mischungen dieser Stoffe. Bevorzugt sind handelsübliche Zemente wie Portland-, Eisenportland-, Hochofen- oder Traß-Zement.

Beton-Zusatzstoffe sind Zusätze, die bestimmte Beton-Eigenschaften beeinflussen. Beispiele sind Gesteinsmehle, Hochofenschlacken, Traß, Flugasche, Betonit, Zementfarben oder organische Füllstoffe.

Beton-Zusatzmittel sind Betonzusätze, die durch chemische und/oder physikalische Wirkung die Beton-Eigenschaften wie z.B. Verarbeitbarkeitszeit, Erhärten oder Erstarren ändern. Beispiele sind Betonverflüssiger, Erstarrungs- und Erhärtungs-Verzögerer oder -beschleuniger, Luftporenbildner der Betondichtungsmittel.

Als Betonzuschlag dient natürliches oder künstliches, dichtes oder poriges Gestein unterschiedlicher Korngrößen.

Die Mischungsverhältnisse und Mengen der einzelnen Komponenten liegen im Bereich üblicher Mörtel- oder Betonmischungen. Ebenso im Bereich des üblichen liegen die Mengen des einzusetzenden Wassers. Bei Kalk- und Zementmörteln besteht ein weiterer Vorteil des erfindungsgemäß eingesetzten Epoxidharz-Härter-Systems darin, daß es auf die Mörtelmischung verflüssigend wirkt. Dennoch kann die zusätzliche Verwendung eines an sich bekannten Betonverflüssigers angebracht sein. Der Wasser-Zement-Faktor dieser Mischungen kann demnach gesenkt werden. Er liegt im Bereich von 0,12-0,5 bevorzugt im Bereich von 0,14-0,3.

Als Epoxidharz im erfindungsgemäßen Gemisch können alle Epoxidverbindungen eingesetzt werden, die mit Aminen härtbar sind. Bei Raumtemperatur flüssige Harze werden bevorzugt als unverdünnte Flüssigkeiten eingesetzt, bei Raumtemperatur feste Epoxidharze werden als Pulver oder in Form einer Lösung in einem verträglichen Verdünner eingesetzt.

Bevorzugt setzt man Polyglycidyläther ein, wie sie durch Verätherung eines zweiwertiggen bzw. mehrwertigen Alkohols oder Diphenols bzw. Polyphenols mit Epichlorhydrin oder Dichlorhydrin in Gegenwart von Alkali zugänglich sind. Diese Verbindungen können sich von Glykolen wie Ethylenglykol, Diethylenglykol, Triethylenglykol, 1,3-Propylenglykol, 1,4-Butandiol, 1,5-Pentandiol, 1,6-Hexandiol, 2,3,6-Hexantriol, Glycerin und insbesondere von Diphenolen bzw. Polyphenolen wie Resorcin, Brenzcatechin, Hydrochinon, 1,4-Dihydroxynaphthalin, Phenol-Formaldehyd-Kondensationsprodukten vom Typ der Resole oder Novolake, Bis(p-hydroxyphenyl)methan, Bis(p-hydroxyphenyl)methyl-phenylmethan, Bis(p-hydroxyphenyl)tolylmethan, 4,4-Dihydroxydiphenyl, Bis(p-hydroxyphenyl)sulfon und Bis(p-hydroxyphenyl)dimethylmethan ableiten. Genannt sein insbesondere die Polyglycidyläther von Bis(p-hydroxyphenyl)dimethylmethan (Bisphenol A) und von Bis(p-hydroxyphenyl)methan (Bisphenol F) sowie Abmischungen derselben. Als reaktive Verdünner können die Di- bzw. Polyglycidyläther der oben erwähnten Glykole bzw. Polyglykole oder Monoepoxide, wie das Octylenoxid, Allylglycidyläther, Buthylglycidyläther, Phenolglycidyläther, p-Butylphenol-glycidyläther, Kresylglycidyläther sowie andere aus langkettigen Alkoholen gewonnene Monoepoxide, insbesondere jene, bei denen die Anzahl Kohlenstoffatome in der aliphatischen Kette 6 - 12 beträgt.

Als nicht reaktive Verdünner für feste und ggf. auch für flüssige Epoxidharze können u.a. kurz- bzw. langkettige Polyole, Benzylalkohol, Phthalate, insbesondere das Dibutylphthalat verwendet werden.

Die erfindungsgemäßen härtbaren Gemische sind dadurch gekennzeichnet, daß sie ein Aralkylamin der allgemeinen Formel (I)

**H**_{**2**}**N-R**_{**1**}**-R**_{**2**}**-R**_{**3**}**-NH**_{**2**}

enthalten, in welcher R₁ und R₃ aliphatische Reste, R₂ einen aromatischen Rest bedeuten und welches mit einem Polyepoxid aushärtet.

Die aliphatischen Reste R₁ und R₃ können gleich oder verschieden sein und stellen Alkylenreste mit 1-6 C-Atomen dar. R₂ ist im einfachsten Fall ein unsubstituierter oder substituierter Phenylenrest oder ein Rest der allgemeinen Formeln 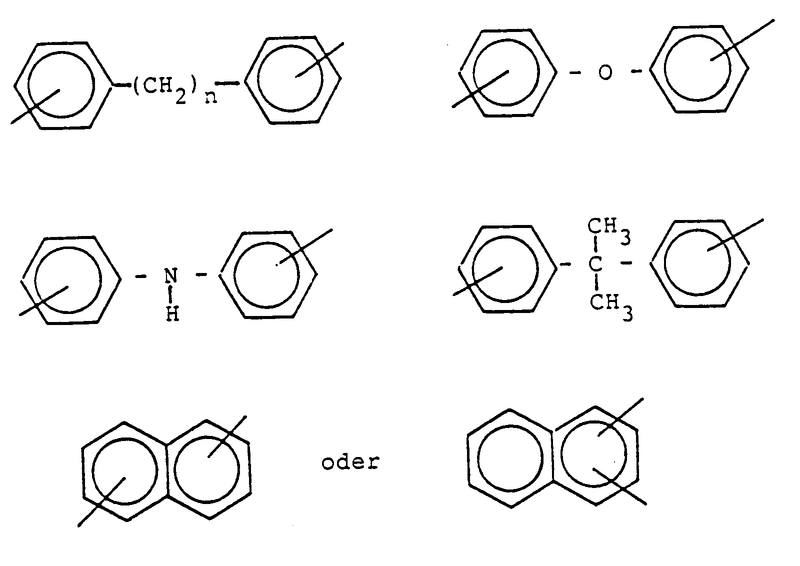 wobei n = 0-3 ist. Die bevorzugten Alkylamine sind Tetrachlor-p-Xylylendiamin, Xylylendiamin und Di-(m-xylylen)-triamin. Das bevorzugt eingesetzt technische m-Xylylendiamin ist ein Gemisch aus m-Xylylendiamin (etwa 95 %) und p-Xylylendiamin.

Diese Aralkylamine können allein oder in Abmischungen mit einem oder mehreren an sich bekannten aminischen Härtern eingesetzt werden, wobei die Härterkomponente mindestens 20 Gew.-% an Aralkylamin enthalten muß. Als zusätzliche aminische Härter können alle an sich für die Härtung von Epoxidverbindungen bekannten aminischen Verbindungen verwendet werden, insbesondere aliphatische, aromatische oder alicyclische Amine, Amine der Gruppen der Polyaminoamide, der Polyimidazoline und der Polyätheramine oder Abmischungen dieser untereinander. Je nach Anforderungen kann es vorteilhaft sein, die Mannichbase der bereits erwähnten Amine einzusetzen bzw. dem Epoxidharzsystem einen oder mehrere bekannte, vorzugsweise basische Beschleuniger wie z.B. Benzyldimethylamin, alpha-Methylbenzyldimethlyamin, 2-(Dimethylaminomethyl)phenol und 2,4,6-Tris(dimethylaminomethyl)phenol beizumischen, und die gewünschte Reaktivität einzustellen.

Die Gesamtmenge des Härters richtet sich nach dessen Gehalt an aminischem Wasserstoff und der Menge der Epoxidgruppen der eingesetzen Epoxidverbindungen, wobei innerhalb technisch vertretbarer Schwankungen stöchiometrische Mischungsverhältnisse eingehalten werden sollen. Sie liegt im allgemeinen im Bereich zwischen 5 und 100 Gew.-% der Epoxidverbindungen, bevorzugt im Bereich von 10-50 %.

Die Menge aus eingesetzten Epoxidverbindungen und Härtern kann in einem Bereich von 1-30 Gew.-%, bezogen auf den fertigen Mörtel, variieren. Sie liegt bevorzugt im Bereich von 2-20 Gew.-%.

Die Herstellung der erfindungsgemäßen härtbaren Gemische ist denkbar einfach, was für eine gleichmäßige Qualität beim Einsatz und der Herstellung direkt an der Baustelle unerläßlich ist.

Im einfachsten Fall werden die einzelnen Komponenten des härtbaren Gemisches in beliebiger Reihenfolge zugegeben und miteinander vermischt. Dabei liegt die wesentliche Vereinfachung darin, daß keine wäßrige Emulsion aus Harz und Härter hergestellt werden muß.

Aus praktischen Gründen empfiehlt es sich, die Reihenfolge der Zudosierung der einzelnen Komponenten je nach Verhältnis des hydraulischen Bindemittels zum organischen Bindemittel (Epoxidharz und Härter) zu ändern: Bei geringer Menge an organischem Bindemittel (1-10 Gew.-% Harz und Härter bezogen auf den fertigen Mörtel) werden bevorzugt zuerst Zement, Beton-Zuschlag, -zusatzstoffe, -zusatzmittel und Wasser miteinander vermischt und dann erst Harz und Härter zugegeben. Bei größeren Mengen an Harz und Härter werden bevorzugt zuerst die hydraulischen Bindemittel, Epoxidharz, -härter und Wasser miteinander vermischt und diesem Gemisch werden der Betonzuschlag sowie ggf. die Beton-Zusatzmittel und -zusatzstoffe zugegeben und durch Mischen eingearbeitet.

Das Mischen und Einarbeiten erfolgt mit einfachen, an einer Baustelle üblicherweise vorhandenen Geräten durch Rühren oder durch Vermischen in einer Drehtrommel, einem sog. Betonmischer.

Daß dabei eine reproduzierbare homogene Verteilung von hydraulischen Bindemitteln, Epoxidharz- und -härter erfolgt und Gemische mit überragenden Eigenschaften erhalten werden, ist in mehrfacher Hinsicht überraschend.

Erstens sind die erfindungsgemäßen Epoxidsysteme nicht weniger wasserunlöslich als die Systeme die zur Emulsionsbildung herangezogen werden. Schon nach einem Tropfen Wasser wird auch hier die klare Flüssigkeit umgehend trüb. Aber auch ihre Mischbarkeit und Löslichkeit in Wasser der einzelnen Komponenten bieten keinen Anhaltspunkt für ein derart günstiges Verhalten, sowohl was die Verfahrenstechnik als auch die Endeigenschaften betrifft. Die Wasserlöslichkeit stellt tatsächlich kein Kriterium dar: Zahlreiche geprüfte wasserlösliche Aminhärter, u.a. solche aus den Gruppen der aliphatischen und der cycloaliphatischen Amine, haben sich, wie in den Beispielen gezeigt wird, für den Einsatz als Härter in den erfindungsgemäßen Verfahrensschritten und Formulierungen entweder als völlig unbrauchbar oder als unvorteilhaft erwiesen.

Es hat sich in weiterem überraschend gezeigt, daß unabhängig von der Reaktivität der Epoxidharz/Härter-Mischung, die ausgehärteten Mörtel gut reproduzierbare Eigenschaften aufweisen. Das Abstimmen der Reaktionsgeschwindigkeit der Epoxidsysteme mit jener der Hydratation des Zements ist nicht nötig, was im krassen Widerspruch zu allen bisher gemachten Erfahrungen mit den Epoxidemulsionen steht.

Im Gegensatz zu einer Epoxidemulsion kann in den neuen Formulierungen die Reaktionszeit des Epoxidharzsystems beliebig verkürzt werden, ohne daß dabei die Hydratation des Zements in irgendeiner Weise gehindert bzw. Systeme, wie sie für viele Anwendungen gewünscht werden.

Im Unterschied zu allen bisher bekannten Epoxid/Zementsystemen werden selbst mit langsam reagierenden Epoxidsystemen schon nach einem Tag Festigkeiten erreicht, die sonst nach einer bzw. mehreren Wochen erreicht werden, und dies bei Verwendung eines Zements, der seine Endeigenschaften nach ca. 1 Monat erreicht.

Ein weiterer wichtiger Vorteil der erfindungsgemäßen Formulierungen im Vergleich zum Stand der Technik besteht zusätzlich darin, daß die Menge des Epoxidharzsystems in der fertigen Formulierung innerhalb eines großen Bereichs variiert werden und somit den Bedürfnissen der verschiedensten Anwendungen angepaßt werden kann. Die neuen Formulierungen weisen ein sehr gutes Haftvermögen auf. Insbesondere auf altem Beton und metallischen Werkstoffen ist die Haftung ausgezeichnet, unabhängig davon, ob die Produkte an der Luft oder unter Wasser angewendet und ausgehärtet werden. Im normalen Fall kann auf die Behandlung des Untergrunds verzichtet werden. Nicht nur im Hinblick auf die ausgezeichnete Haftung an der Luft, sondern auch auf die Möglichkeit der Härtung und der Haftung unter Wasser, darunter auch Meerwasser, stellen die erfindungsgemäßen Formulierungen gemessen am Stand der Technik neue Produkte dar. Es war bisher nie gelungen, durch Einsatz von Epoxidemulsionen hergestellte, epoxidmodifizierte Zementmörtel unter Wasser anzuwenden. Um die praktische Bedeutung dieser Eigenschaft zu erläutern, genügt es, auf die sich nun bietende Möglichkeit der Sanierung von unter Wasser stehenden Betonwerken hinzuweisen.

Der Wasserwert der neuen Formulierungen, mit Zement als hydraulischem Bindemittel, ist in einem weiten Bereich einstellbar und im normalen Fall niedriger als der mit Epoxidemulsionen hergestellter Formulierungen. Dies hat zur Folge, daß der Reaktions- bzw. Erhärtungsschwund sehr niedrig ist.

Auch in mechanischer Hinsicht stellen die neuen Formulierungen einen in dem beobachteten Ausmaß überraschenden technischen Fortschritt dar. Speziell zu erwähnen ist die hohe Druckfestigkeit. Sie erreicht Wert, die bis zweifach höher sind als jene des reinen Zementmörtels und die, im Gegensatz zu den Formulierungen mit Epoxidemulsionen, ungeachtet der äußeren Bedingungen, ausgezeichnet reproduzierbar sind.

Durch die Menge des Epoxidsystems kann der E-Modul des ausgehärteten Mörtels beeinflußt werden. Mit zunehmendem Epoxidanteil nimmt der E-Modul ab. Der E-Modul-Endwert wird nach ca. 28 Tagen erreicht. Wie ausgedehnte diesbezügliche Untersuchungen gezeigt haben, bleibt er im Frost- und Tausalztest (25-maligem Gefrieren und Auftauen) nahezu unverändert.

Ein Zusammenhang zwischen dem E-Modul und der Druckfestigkeit konnte nicht festgestellt werden, d.h. die Druckfestigkeit liegt gleich hoch, unabhängig davon, ob der E-Modul z.B. 30 000 N/mm² oder 10 000 N/mm² beträgt. Technisch begründet ist deshalb die Aussage, daß die hier beanspruchten Gemische einen Werkstoff darstellen, der auf vielen Gebieten seit langem gesucht wird, nämlich einen Zementbeton mit einer sehr hohen Druckfestigkeit und einem niedrigen E-Modul. Dies erweitert ihr Einsatzgebiet beträchtlich und ermöglicht neue technische Lösungen.

Dieses gute Eigenschaftsprofil der erfindungsgemäßen härtbaren Gemische ermöglicht ein weites Anwendungsgebiet und den Einsatz überall dort, wo der reine Zementmörtel aufgrund seiner geringen Druck- und Biegezugfestigkeit, Chemikalienbeständigkeit und Haftungseigenschaften nicht genügt. So sind die Gemische aufgrund ihrer guten Haftfähigkeit direkt einsetzbar als Kleber für mineralische Baustoffe sowie als Reparaturmörtel von Betonböden und -wänden sowohl an der Luft als auch unter Wasser.

Die gute Adhäsion zu Metall und die gute Chemikalienbeständigkeit ermöglichen den Einsatz als hochwertige Spachtelmassen für den Korrosionsschutz sowie zur Innen- und Außenbeschichtung von Metallröhren.

Die genannten Eigenschaften, verbunden mit der frühen Druckfestigkeit und Frühbelastbarkeit, sind die Grundlagen für alle die Anwendungen, bei denen nach möglichst kurzer Härtungszeit eine Belastung erfolgen soll. Beispiele hierfür sind die Verwendung als Einpreßmörtel, zur Herstellung von Gebirgsankern oder zur Herstellung und Sanierung von Fahrbahnen und Fahrbahnplatten, insbesondere auf Brücken und Parkdecks, sowie das Auffüllen von Spurrillen in Betonfahrbahnen.

### BEISPIELE

Alle Mengenangaben sind Angaben in Gewichtsteilen. Die Abkürzung n.m. bedeut nicht meßbar.

### Beispiele 1 - 11

### Vergleichsbeispiel 1-5

Es wird ein hydraulisches Bindemittelgemisch (I) folgender Zusammensetzung hergestellt:

### Hydraulisches Bindemittelgemisch (I)

- 231: Quarzsand der Korngröße 6-10 mm
- 126: Quarzsand der Korngröße 4-6 mm
- 63: Quarzsand der Korngröße 2-3,5 mm
- 154: Quarzsand der Korngröße 0,5-1,6 mm
- 126: Quarzsand der Korngröße 0,1-0,5 mm
- 233: Portlandzement PZ 325
- 40: Wasser

Die Komponenten werden in einem Zwangsmischer vorgelegt und während 5 min homogen vermischt.

Dieser Grundmischung werden gemäß der Beispiele jeweils verschiedene Epoxidharze und Härter zugegeben und während 5 min homogen gemischt. Die daraus resultierenden Mörtel zeigen alle gute Verarbeitungs- und Fließeigenschaften.

Aus den Mörteln werden Probekörper hergestellt, bei Raumtemperatur gehärtet und nach den angegebenen Tagen (d) werden Druckfestigkeit, Biegezugfestigkeit und E-Modul bestimmt.

Die erhaltenen Werte sind in Tabelle I aufgeführt.

### Beispiel 1

- 33: Epoxidharz auf Basis Bisphenol A (Epoxidwert 0,53 Val/100 g, Viskosität bei 20° C: 1.100 m·Pas)
- 4,5: m-Xylylendiamin
- 4,4: Polyaminoimidazolin (Viskosität bei 20° C: 375 m·Pas)

### Beispiel 2

- 33: Epoxidharz aus Bisphenol A und F (Verhältnis 40:60) (Epoxidwert 0,54 Val/100 g, Viskosität bei 20° C: 7.200 m·Pas)
- 4,5: m-Xylylendiamin
- 4,5: Polyaminoamid (Viskosität bei 20° C: 800 m·Pas)

### Beispiel 3

- 33: Epoxidharz gemäß Beispiel 2
- 4,5: m-Xylylendiamin
- 1,7: Isophorondiamin

### Beispiel 4

- 50: Epoxidharz gemäß Beispiel 2
- 7: m-Xylylendiamin
- 5,9: Isophorondiamin

### Beispiel 5

- 70: Epoxidharz gemäß Beispiel 2
- 7: Kresyldiglycidylether
- 10: m-Xylylendiamin
- 8,8: Polyaminoimidazolin gemäß Beispiel 1

### Beispiel 6

- 70: Epoxidharz gemäß Beispiel 2
- 4: m-Xylylendiamin
- 6: Polyaminoimidazolin gemäß Beispiel 1

### Beispiel 7

Epoxidharz und Härter gemäß Beispiel 2. Die Probekörper werden zur Aushärtung unter Wasser gelegt. Zusätzlich wird das Gemisch auf unter Wasser stehenden Zementbeton aufgegossen und ausgehärtet. Zur Ermittlung der Haftfestigkeit werden zwei metallische Stempel mit eingegossen.

### Beispiel 8

- 90: Epoxidharz gemäß Beispiel 2
- 16,5: m-Xylylendiamin

### Beispiel 9

Epoxidharz und Härter gemäß Beispiel 8. Die Probekörper werden zur Aushärtung unter Wasser gelegt. Zusätzlich wird das Gemisch auf unter Wasser stehenden Zementbeton aufgegossen und ausgehärtet. Zur Ermittlung der Haftfestigkeit werden zwei metallische Stempel mit eingegossen.

### Beispiel 10

- 33: Epoxidharz gemäß Beispiel 2
- 12: Tetrachloro-p-xylylendiamin

### Beispiel 11

- 33: Epoxidharz gemäß Beispiel 2
- 10: Epoxidharz gemäß Beispiel 1
- 10: [4,4'-Bisaminomethylen-phenylen]-propan-2,2

### Vergleichsbeispiel 1 (V1)

Hydraulisches Bindemittelgemisch (I) ohne Zusatz von Epoxidharz und Härter, jedoch zur Erzielung der Fließeigenschaften mit zusätzlich 20 Wasser.

### Vergleichsbeispiel 2 (V2)

- 70: Epoxidharz gemäß Beispiel 2
- 50: Härterkomponente A gemäß Beispiel 1 der EP-B 0 103 908

Harz und Härter werden in dem Anmachwasser des hydraulischen Bindemittelgemisches (I) emulgiert. Danach werden die anorganischen Bestandteile zugegeben und 10 min homogen vermischt.

### Vergleichsbeispiel 3 (V3)

Trockenmörtel aus der Grundrezeptur des hydraulischen Bindemittels (I)
- 70: Epoxidharz gemäß Beispiel 2
- 10: m-Xylylendiamino-oxalat

Harz und Härter werden intensiv miteinander vermischt, danach werden die anorganischen Bestandteile zugegeben und gemischt. Der so hergestellte Trockenmörtel wird vor Gebrauch mit Wasser versetzt und 5 min gemischt.

### Vergleichsbeispiel 4 (V4)

- 70: Epoxidharz gemäß Beispiel 2
- 10: Kresyldiglycidylether
- 16: Isophorondiamin

### Vergleichsbeispiel 5 (V5)

- 70: Epoxidharz gemäß Beispiel 2
- 10: Kresyldiglycidylether
- 9,45: Triethylentetramin

Man beobachtet zuerst eine rasche Verdickung des Gemisches. Nach einem Tag ist das Gemisch trocken, jedoch ohne nennenswerte mechanische Eigenschaften.

**Tabelle I**

| **Beispiel** | **Druckfestigkeit [N/mm**^{**2**}**] nach** | | | | **Biegezugfestigkeit [N/mm**^{**2**}**] nach** | | | | **E-Modul [N/mm**^{**2**}**)** | **Haftfestigkeit** |
|---|---|---|---|---|---|---|---|---|---|---|
| | **1d** | **2d** | **7d** | **28d** | **1d** | **2d** | **7d** | **28d** | | |
| 1 | 28 | 40 | 47 | 55 | 6 | 8 | 10 | 12 | 27.000 | |
| 2 | 29 | 34 | 45 | 61 | 4 | 6 | 8 | 9 | 28.000 | |
| 3 | 25 | 37 | 48 | 65 | 3 | 5 | 6 | 9 | 28.000 | |
| 4 | 31 | 39 | 48 | 54 | 3 | 5 | 6 | 9 | 18.000 | |
| 5 | 26 | 33 | 45 | 55 | 3 | 5 | 8 | 11 | 16.000 | |
| 6 | 23 | 30 | 43 | 47 | 2 | 5 | 7 | 9 | 24.000 | |
| 7 | 31 | 34 | 45 | 54 | 4 | 5 | 7 | 10 | 28.000 | Bruch im alten Zementbeton |
| 8 | 40 | 51 | 57 | 61 | 5 | 7 | 9 | 12 | 11.000 | |
| 9 | 38 | 50 | 57 | 58 | 4 | 6 | 8 | 9 | 11.000 | dto |
| 10 | 25 | 28 | 43 | 51 | 3 | 5 | 8 | 9 | 25.000 | |
| 11 | 22 | 27 | 36 | 44 | 3 | 5 | 8 | 8 | 24.000 | |
| V1 | n.m. | n.m. | 22 | 32 | n.m. | n.m. | 4 | 8 | 33.000 | keine Haftung |
| V2 | 12 | 24 | 43 | 63 | n.m. | 3 | 8 | 13 | 30.000 | |
| V3 | 10 | 17 | 34 | 45 | n.m. | 2 | 6 | 9 | 28.000 | |
| V4 | 14 | 19 | 29 | 38 | 2 | 4 | 6 | 8 | 20.000 | |
| V5 | n.m. | n.m. | 15 | 26 | n.m. | n.m. | 2 | 5 | --- | |

### Beispiele 12-15

Es wird ein hydraulisches Bindemittelgemisch folgender Zusammensetzung hergestellt:

### Hydraulisches Bindemittelgemisch (II)

- 231: Quarzsand der Korngröße 6-10 mm
- 126: Quarzsand der Korngröße 4-6 mm
- 63: Quarzsand der Korngröße 2-3,5 mm
- 154: Quarzsand der Korngröße 0,5-1,6 mm
- 126: Quarzsand der Korngröße 0,1-0,5 mm
- 233: Portlandzement PZ 325
- 60: Wasser

Die Komponenten werden in einem Zwangsmischer vorgelegt und während 5 min homogen vermischt.

Diese Grundmischung werden gemäß der Beispiele jeweils verschiedene Epoxidharze und Härter zugegeben und während 5 min homogen gemischt. Die daraus resultierenden Mörtel zeigen alle gute Verarbeitungs- und Fließeigenschaften.

Aus den Mörteln werden Probekörper hergestellt, bei Raumtemperatur gehärtet und nach den angegebenen Zeiten werden Druckfestigkeit, Biegezugfestigkeit und E-Modul bestimmt.

Die erhaltenen Werte sind in Tabelle II aufgeführt.

### Beispiel 12

Epoxidharz und Härter gemäß Beispiel 1

### Beispiel 13

- 50: Epoxidharz gemäß Beispiel 2
- 7: m-Xylylendiamin
- 2,5: Polyaminoimidazolin (Viskosität bei 20° C: 375 m·Pas)

### Beispiel 14

- 50: Epoxidharz gemäß Beispiel 2
- 14: Mannichbase (Aceton, Formaldehyd) aus Xylylendiamin, sophorondiamin (1:1) und 20 Gew.-% Benzylalkohol (Viskosität bei 20° C: 25 m·Pas; Aminäquivalent 54 g)

### Beispiel 15

- 50: Epoxidharz gemäß Beispiel 2
- 10: Diglycidylether des Hexandiols
- 26: Mannichbase (Aceton, Formaldehyd) aus Xylylendiamin, Isophorondiamin (1:1) und 5 Gew.-% Benzylalkohol (Viskosität bei 20° C: 2500 m·Pas; Aminäquivalent 92 g)

**Tabelle II**

| **Beispiel** | **Druckfestigkeit [N/mm**^{**2**}**] nach** | | | | **Biegezugfestigkeit [N/mm**^{**2**}**] nach** | | | | **E-Modul [N/mm**^{**2**}**)** |
|---|---|---|---|---|---|---|---|---|---|
| | **1d** | **2d** | **7d** | **28d** | **1d** | **2d** | **7d** | **28d** | |
| 12 | 34 | 40 | 44 | 49 | 4 | 5 | 6 | 11 | 26.000 |
| 13 | 27 | 34 | 43 | 48 | 2 | 4 | 6 | 10 | 22.000 |
| 14 | 31 | 34 | 44 | 59 | 3 | 5 | 6 | 11 | 23.000 |
| 15 | 37 | 42 | 49 | 57 | 3 | 5 | 6 | 11 | 24.000 |

## Patentansprüche

1. Härtbare Gemische aus hydraulischen Bindemitteln Betonzuschlägen, Wasser, Epoxidharz und -härter, sowie ggf Beton-Zusatzmittel und -Zusatzstoffe, **dadurch gekennzeichnet**, daß die Härterkomponenten mindestens 20 Gew.-% eines Amins der allgemeinen Formel
**H**_{**2**}**N-R**_{**1**}**-R**_{**2**}**-R**_{**3**}**-NH**_{**2**}
sowie bis zu 80 Gew.-% eines an sich bekannten aminischen Härters enthält, wobei R₁ und R₃ gleich oder unterschiedlich sind und Alkylenreste mit 1 bis 6 C-Atomen und R₂ einen aromatischen Rest bedeuten.

2. Gemische nach Anspruch 1, **dadurch gekennzeichnet**, daß das Amin gemäß der allgemeinen Formel Xylylendiamin ist.

3. Gemische nach Anspruch 1, **dadurch gekennzeichnet**, daß das Amin gemäß der allgmeinen Formel Tetrachlorxylylendiamin ist.

4. Gemisch nach Anspruch 1, **dadurch gekennzeichnet**, daß das Amin als Mannichbase vorliegt.

5. Verfahren zur Herstellung der härtbaren Gemische gemäß der Ansprüche 1-4, **dadurch gekennzeichnet**, daß die einzelnen Komponenten in beliebiger Reihenfolge zugegeben und miteinander vermischt werden.

6. Verfahren nach Anspruch 5, **dadurch gekennzeichnet**, daß zuerst die hydraulischen Bindemittel, Epoxidharz, -härter und das Wasser miteinander vermischt werden und diesem Gemisch der Betonzuschlag sowie ggf. die Beton-Zusatzmittel und -zusatzstoffe zugegeben und durch Mischen eingearbeitet werden.

7. Verwendung der härtbaren Gemische gemäß den Ansprüchen 1-4 als Reparaturmörtel bei der Sanierung von Betonböden und -wänden.

8. Verwendung der härtbaren Gemische gemäß den Ansprüchen 1-4 zur Fahrbahnsanierung.

9. Verwendung der härtbaren Gemische gemäß den Ansprüchen 1-4 zur Innen- und Außenbeschichtung von Metallrohren.

10. Verwendung der härtbaren Gemische gemäß den Ansprüchen 1-4 als Einpreßmörtel.

11. Verwendung der härtbaren Gemische gemäß den Ansprüchen 1-4 zur Herstellung von Gebirgsankern.

12. Verwendung der härtbaren Gemische gemäß den Ansprüchen 1-4 als Spachtelmassen für den Korrosionsschutz.

13. Verwendung der härtbaren Gemische gemäß den Ansprüchen 1-4 als Kleber für mineralische Baustoffe.

## Claims

1. Hardenable mixtures of hydraulic binders, concrete aggregate, water, epoxy resin and epoxy hardener and, optionally, concrete additives and admixtures, characterised in that the hardener component contains at least 20 wt.% of an amine of the general formula
**H**_{**2**}**N-R**_{**1**}**-R**_{**2**}**-R**_{**3**}**-NH**_{**2**}
and up to 80 wt.% of an amine hardener known per se, where R₁ and R₃ are the same or different and represent alkene residues with 1 to 6 C atoms and R₂ is an aromatic residue.

2. Mixtures according to claim 1, characterised in that the amine according to the general formula is xylylene diamine.

3. Mixtures according to claim 1, characterised in that the amine according to the general formula is tetrachloroxylylene diamine.

4. A mixture according to claim 1, characterised in that the amine is present as a Mannich base.

5. A process for the preparation of the hardenable mixtures according to claims 1 to 4, characterised in that the individual components are added in any order and mixed together.

6. A process according to claim 5, characterised in that first the hydraulic binders, epoxy resin, epoxy hardener and the water are mixed together, and the concrete aggregate and, optionally, the concrete additives and admixtures, are added to this mixture and incorporated by mixing.

7. Use of the hardenable mixtures according to claims 1 to 4 as repairing mortar for restoring concrete floors and walls.

8. Use of the hardenable mixtures according to claims 1 to 4 for road repairs.

9. Use of the hardenable mixtures according to claims 1 to 4 for internally and externally coating metal pipes.

10. Use of the hardenable mixtures according to claims 1 to 4 as injection mortar.

11. Use of the hardenable mixtures according to claims 1 to 4 for the construction of rock bolts.

12. Use of the hardenable mixtures according to claims 1 to 4 as fillers for protection against corrosion.

13. Use of the hardenable mixtures according to claims 1 to 4 as cements for mineral building materials.

## Revendications

1. Mélanges durcissables à partir de liants hydrauliques, d'additifs pour béton, d'eau, de durcisseurs et de résine époxyde, ainsi qu'éventuellement de matières ou de moyens d'addition pour béton, caractérisés en ce que les composants de durcisseurs contiennent au moins 20 % en poids d'une amine de la formule générale
H₂N-R₁-R₂-R₃-NH₂
ainsi que jusqu'à 80 % en poids d'un durcisseur aminique connu per se, R₁ et R₃ étant identiques ou différents et les radicaux alkylène en 1 jusqu'à 6 atomes de carbone C et R₂ signifie un radical aromatique.

2. Mélanges selon la revendication 1, caractérisés en ce que l'amine selon la formule générale est une xylylène diamine.

3. Mélanges selon la revendication 1, caractérisés en ce que l'amine selon la formule générale est une tétrachloroxylylène diamine.

4. Mélanges selon la revendication 1, caractérisés en ce que l'amine se présente sous forme d'une base de Mannich.

5. Procédé pour la préparation de mélanges durcissables selon les revendications 1-4, caractérisé en ce que les différents composants sont ajoutés dans une séquence quelconque et mélangés entre eux.

6. Procédé selon la revendication 5, caractérisé en ce que l'on mélange d'abord le liant hydraulique, le durcisseur, la résine époxyde et l'eau et l'on ajoute à ce mélange, l'additif pour béton ainsi qu'éventuellement les matières et moyens d'addition pour béton et l'on introduit par mélange.

7. Utilisation des mélanges durcissables selon les revendications 1-4 en tant que mortier de réparation pour la réfection de sols et de parois en béton.

8. Utilisation des mélanges durcissables selon les revendications 1-4 pour la réfection de chaussées.

9. Utilisation des mélanges durcissables selon les revendications 1-4 pour le revêtement intérieur et extérieur de tubes métalliques.

10. Utilisation des mélanges durcissables selon les revendications 1-4 comme mortier d'injection.

11. Utilisation des mélanges durcissables selon les revendications 1-4 pour la fabrication d'ancrage de terrains montagneux.

12. Utilisation des mélanges durcissables selon les revendications 1-4 comme mastic bouche-pores pour la protection contre la corrosion.

13. Utilisation des mélanges durcissables selon les revendications 1-4 comme substances collantes pour matériaux de construction minéraux.
